# EUROPEAN PATENT SPECIFICATION

(11) **EP 2 472 916 B1**
(45) Date of publication and mention of the grant of the patent: **17.02.2016**
(21) Application number: 10816698.4
(22) Date of filing: 15.09.2010
(51) Int. Cl.: H04W 4/18, H04J 3/06, H04J 3/14

(54) **METHOD AND CLOCK DEVICE FOR PROCESSING PRECISION TIME PROTOCOL MESSAGE**
VERFAHREN UND TAKTVORRICHTUNG ZUR VERARBEITUNG EINER ECHTZEIT-PROTOKOLLNACHRICHT
PROCÉDÉ ET DISPOSITIF D'HORLOGE POUR TRAITER UN MESSAGE DE PROTOCOLE DE SYNCHRONISATION D'HORLOGE

(30) Priority: 17.09.2009 CN 200910093302; 25.01.2010 CN 201010107643
(43) Date of publication of application: 04.07.2012
(73) Proprietor: Huawei Technologies Co., Ltd., Longgang District Shenzhen, Guangdong 518129 (CN)
(72) Inventor: CHU, Yuhong, Shenzhen Guangdong 518129 (CN); DONG, Yongqiang, Shenzhen Guangdong 518129 (CN); LIU, Song, Shenzhen Guangdong 518129 (CN); XU, Xiao, Shenzhen Guangdong 518129 (CN); XIE, Lei, Shenzhen Guangdong 518129 (CN)
(74) Representative: Epping - Hermann - Fischer
(86) International application number: PCT/CN2010/076939
(87) International publication number: WO 2011/032494

(56) References cited:
- EP-A1- 1 715 607
- CN-A- 101 217 498
- CN-A- 101 242 230
- US-A- 5 469 432
- US-A1- 2002 018 470
- US-A1- 2008 075 217
- "IEEE Standard for a precision clock synchronization protocol for networked measurement and control systems;IEC 61588:2009(E)", IEEE STANDARD, IEEE, PISCATAWAY, NJ, USA, 2 February 2009 (2009-02-02), pages C1-274, XP017602107, ISBN: 978-2-8318-1026-3
- PERLMAN R ED - PERLMAN R: "Interconnections: Bridges and routers, PASSAGE", 1 January 1992 (1992-01-01), INTERCONNECTIONS: BRIDGES AND ROUTERS, READING, ADDISON WESLEY, US, PAGE(S) 107 - 110, XP002298549, ISBN: 978-0-201-56332-0 * the whole document *
- 'IEEE Standard for a Precision Clock Synchronization Protocol for Networked Measurement and Control Systems' IEEE 24 July 2008, page 6, XP008154794

## Description

### FIELD OF THE INVENTION

The present invention relates to mobile communications technologies, and in particular, to a method for processing a precision time protocol packet and a clock device.

### BACKGROUND OF THE INVENTION

A mobile network is evolving toward all Internet Protocol (Internet Protocol, IP) transformation; all-IP transformation of the mobile network is an end-to-end IP transformation process of the whole network, including aspects such as a terminal application, an access network, a bearer network, a core network, and maintenance and management. IP transformation of an access network intends to accommodate diversified bandwidth requirements and quality requirements of users to provide a higher bandwidth for various services and comprehensively reduce a cost. At present, as the IP transformation of the core network is gradually complete, IP transformation of a radio access network becomes a key for the whole mobile network to evolve toward the all-IP transformation

In the process of implementing the IP transformation of the radio access network, clock synchronization is one of the key problems. Clock synchronization greatly affects handover performance and coverage performance, and no matter whether a system is a second generation (2nd Generation, 2G) mobile communication system, a third generation (3rd generation, 3G) mobile communication system, or a post-3G system, a base station has a strict requirement on precision of a clock frequency. In addition, because a time division duplexing (Time Division Duplexing, TDD) base station uplink and downlink use a same frequency, to avoid interference, a strict requirement is also imposed on precision of a clock phase. A basic function of the Precision Time Protocol (Precision Time Protocol, PTP) defined by IEEE 1588 is to keep the most precise clock synchronous with other clocks in a distributed network, which is used to perform sub-microsecond level synchronization of clocks in a sensor, an executor, and another terminal device in a standard Ethernet or another distributed bus system that uses a multicast technology. To increase synchronization precision, PTP requires that each network node should have a network interface card including a real-time clock with respect to hardware so a relevant service based on a PTP protocol stack is able to be implemented. In a PTP technology defined by the existing IEEE 1588, assuming that a PTP packet received by a node device is a PTP packet of the device that needs to be processed by the node device, the PTP packet of the device may be correspondingly processed based on difference node devices.

International standard IEEE 1588 Edition 2.0 discloses a precision clock synchronization protocol for networked measurement and control systems. The protocol is applicable to distributed systems consisting of one or more nodes, communicating over a network. The protocol executes within a logical scope called a domain. Unless otherwise specified, all PTP messages, data sets, etc. are always associated with a particular domain. The standard permits to achieve synchronization accuracies better than lns.

A passage from a book titled "Interconnections: Bridges and Routers" by R. PERLMAN (ISBN 978-0-201-56332-0) discloses the forwarding of a packet from one side of a bridge to another side. For example, when a packet is received from a transparent bridge (TB) port, the bridge must make a decision whether or not it should be forwarded. If the destination is an address that the TB port of the bridge has learned is on the port on which the packed was received, the bridge will not forward the packet. If a route to the destination address has been cached on the SR side of the bridge, or if no cache entry exists for the destination, the bridge will forward the packet.

The prior art has at least the following problem: The prior art provides only a solution for the node device to process the PTP packet of the device.

### SUMMARY OF THE INVENTION

Embodiments of the present invention provide a method for processing a Precision Time Protocol packet and a clock device to solve a problem of a lack of a solution for determining and processing a PTP packet that is not a PTP packet of the device.

An embodiment of the present invention provides a method for processing a Precision Time Protocol packet, including:
receiving, by a clock device, a Precision Time Protocol PTP packet, where the Precision Time Protocol packet carries end-to-end parameter information, wherein the end-to-end parameter information comprises a domain number;
judging, by the clock device, whether the domain number is the same as a domain number configured in the clock device itself;
if a judgment result is that the domain number is different from the domain number configured in the clock device itself, determining that the received PTP packet is not a PTP packet of the device; and
forwarding, by the clock device, the PTP packet that is not a PTP packet of the device when the received PTP packet is not a PTP packet of the device.

An embodiment of the present invention provides a clock device, including:
a receiving module, configured to receive a Precision Time Protocol PTP packet, where the PTP packet carries end-to-end parameter information, wherein the end-to-end parameter information comprises a domain number;
a determining module, configured to judge whether the domain number is the same as a domain number configured in the clock device itself and to determine that the received PTP packet is not a PTP packet of the device when a judgment result is that the domain number is different from the domain number configured in the clock device itself; and
a forwarding module, configured to forward the PTP packet that is not a PTP packet of the device when the received PTP packet is not a PTP packet of the device.

As known from the preceding technical solutions, in embodiments of the present invention, whether the received PTP packet is not a PTP packet of the device is determined according to the end-to-end parameter information, and then the PTP packet that is not a PTP packet of the device is forwarded, so that the clock device is capable of determining and processing the PTP packet that is not a PTP packet of the device.

### BRIEF DESCRIPTION OF THE DRAWINGS

FIG. 1 is a schematic flowchart of a method according to a first embodiment of the present invention;
FIG. 2 is a schematic flowchart of a method according to a second embodiment of the present invention;
FIG. 3 is a schematic flowchart of a method according to a third embodiment of the present invention;
FIG. 4A, FIG. 4B, and FIG. 4C are a schematic flowchart of a method according to a fourth embodiment of the present invention;
FIG. 5 is a schematic structural diagram of a system according to the fourth embodiment of the present invention;
FIG. 6A, FIG. 6B, and FIG. 6C are a schematic flowchart of a method according to a fifth embodiment of the present invention;
FIG. 7 is a schematic structural diagram of a system according to the fifth embodiment of the present invention;
FIG. 8 is a schematic flowchart of a method according to a sixth embodiment of the present invention;
FIG. 9 is a schematic structural diagram of a clock device according to a seventh embodiment of the present invention;
FIG. 10 is a schematic structural diagram of a clock device according to an eighth embodiment of the present invention;
FIG. 11 is a schematic structural diagram of a clock device according to a ninth embodiment of the present invention; and
FIG. 12 is a schematic structural diagram of a clock device according to a tenth embodiment of the present invention.

### DETAILED DESCRIPTION OF THE EMBODIMENTS

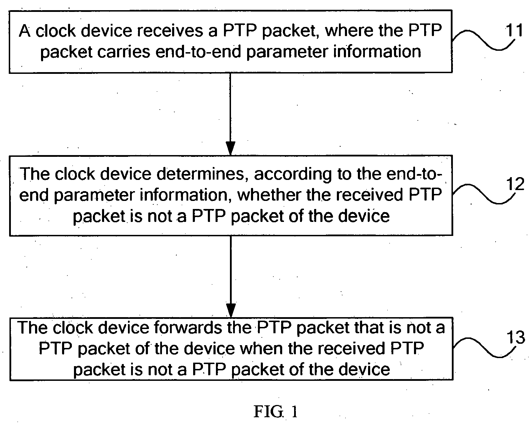

FIG 1 is a schematic flowchart of a method according to a first embodiment of the present invention, including:
Step 11: A clock device receives a PTP packet, where the PTP packet carries end-to-end parameter information.

The end-to-end parameter information may be at least one of the following items: a destination address and a domain number (Domain Number, DN). The destination address is address information of a receiving end in end-to-end communication, and the domain number is domain information of a transmitting end in the end-to-end communication.

During network deployment, node devices involved in a network may be divided into different domains according to an actual requirement, and different domains have different domain numbers.

The following manners may be used for the division of domains:

For example, when end-to-end frequency synchronization is performed, two node devices (a master clock device and a slave clock device) at an end point are divided into a same domain (for example, Domain 1), while an intermediate node device involved in the end-to-end frequency synchronization is divided into another domain (for example, Domain 2).

In another example, the division is performed based on different operators, that is; node devices used by different operators are divided into different domains.

In still another example, the division is performed based on levels of mobile communication networks, for example, when a 2G network and a 3G network coexist, a node device of the 2G network and that of the 3G network are divided into different domains.

After the division of domains, node devices in different domains have different domain numbers. When the end-to-end communication is performed, the node device at the transmitting end may carry its own domain number in a generated PTP packet, and afterward, send the PTP packet carrying the domain number to a subsequent node device until the PTP packet carrying the domain number of the domain to which the transmitting end belongs is sent to the node device at the receiving end.

During communication using PTP, node devices defined by IEEE 1588 may be divided into an ordinary clock (Ordinary Clock, OC) device, a boundary clock (Boundary Clock, BC) device, and a transparent clock (Transparent Clock, TC) device. Different clock devices perform different processing on PTP packets of the devices, for example, the OC device or the BC device may perform terminating processing on the PTP packet of the device, while the TC device may perform normal PTP layer processing on the PTP packet of the device and then forward the PTP packet to the subsequent node device.

The PTP packet of the device may be a PTP packet that needs to be processed by the clock device; the terminating processing may be understood as not forwarding a received PTP packet at the node device but terminating a processing procedure of the PTP packet at the node device; the normal PTP layer processing may refer to adding time delay information, adding time delay variation information, modifying packet dwell time, and so on.

For a specific process for each of the preceding clock devices to process the PTP packet of the device, see the prior art. This embodiment of the present invention concerns how the clock device determines whether the received PTP packet is a PTP packet of the device or a PTP packet that is not a PTP packet of the device and how to process the PTP packet that is not a PTP packet of the device, where the PTP packet that is not a PTP packet of the device refers to a PTP packet on which the clock device does not need to perform PTP layer processing.

Step 12: The clock device determines, according to the end-to-end parameter information, whether the received PTP packet is not a PTP packet of the device.

Based on different clock device, the corresponding clock device may determine, according to the domain number, whether the received PTP packet is not a PTP packet of the device, or, determine, according to the destination address, whether the received PTP packet is not a PTP packet of the device, or, determine, according to the destination address and the domain number, whether the received PTP packet is not a PTP packet of the device.

Step 13: The clock device forwards the PTP packet that is not a PTP packet of the device when the received PTP packet is not a PTP packet of the device.

In this step, the PTP packet that is not a PTP packet of the device may be forwarded to a node device other than the clock device itself.

Because no solution for processing a PTP packet that is not a PTP packet of the device exists in the prior art, the clock device may directly discard the PTP packet that is not a PTP packet of the device; when end-to-end synchronization needs to be implemented, if an intermediate node discards the PTP packet generated at the end point, the end-to-end synchronization may be not practicable, which affects evolution and upgrading of the network.

In this embodiment, determining and processing on the PTP packet that is not a PTP packet of the device is implemented by determining the PTP packet that is not a PTP packet of the device and performing forwarding processing on the PTP packet that is not a PTP packet of the device. This may avoid a problem of discarding the PTP packet that is not a PTP packet of the device and ensure implementation of the end-to-end synchronization.

As known from the preceding description, the OC device, the BC device, and the TC device have different functions, and differently process the PTP packet. Therefore, the following embodiments describe the corresponding processes respectively.

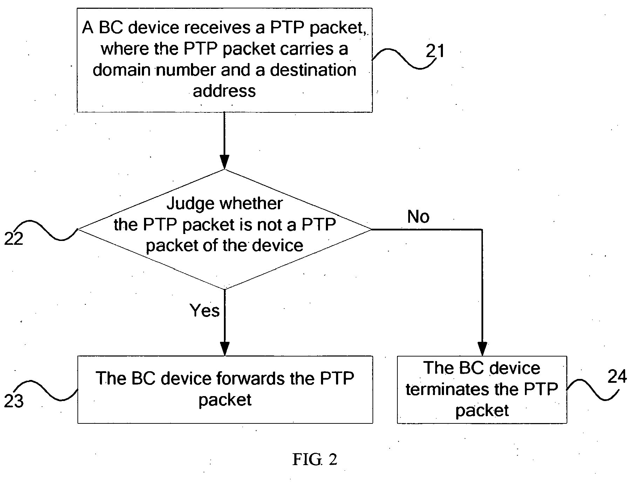

FIG. 2 is a schematic flowchart of a method according to a second embodiment of the present invention, including:
Step 21: A BC device receives a PTP packet, where the PTP packet carries a domain number and a destination address.

During end-to-end synchronization, a node device of a transmitting end may carry a domain number in a generated PTP packet, where the domain number is a domain number of a domain to which the node device of the transmitting end belongs. Afterward, the domain number remains unchanged when the PTP packet is transmitted on each node device, that is, the domain number is the domain number of the domain to which the node device of the transmitting end belongs.

It is understandable that because the BC device performs terminating processing on a PTP packet of the device and does not forward the PTP packet of the device, the destination address in the PTP packet of the device should be an address of the BC device. Therefore, the BC device needs to compare destination addresses in addition to domain numbers in a procedure of judging whether the PTP packet is a PTP packet of the device.

Step 22: The BC device judges, according to the domain number and destination address carried in the PTP packet, whether the PTP packet is not a PTP packet of the device. If the PTP packet is not a PTP packet of the device, step 23 is performed. If the PTP packet is a PTP packet of the device, step 24 is performed.

Specifically, the BC device judges whether the domain number carried in the PTP packet is the same as a domain number configured by the BC device itself If a judgment result is that the domain number carried in the PTP packet is different from the domain number configured by the BC device itself, the received PTP packet is not a PTP packet of the device. If the judgment result is that the domain number carried in the PTP packet is the same as the domain number configured by the BC device itself and when a multicast mode is used, whether the destination address carried in the PTP packet is a multicast address of the BC device itself is further judged, if a judgment result is that the destination address carried in the received PTP packet is the multicast address of the BC device itself, the received PTP packet is a PTP packet of the device, and if the judgment result is that the destination address carried in the received PTP packet is not the multicast address of the BC device itself, the received PTP packet is not a PTP packet of the device. If the judgment result is that the domain number carried in the PTP packet is the same as the domain number configured by the BC device itself and when a unicast mode is used, whether the destination address carried in the PTP packet is a port address of the BC device itself is further judged, if a judgment result is that the destination address carried in the received PTP packet is the port address of the BC device, the PTP packet is a PTP packet of the device, and if the judgment result is that the destination address carried in the PTP packet is not the port address of the BC device, the PTP packet is not a PTP packet of the device.

Step 23: The BC device forwards the PTP packet.

Because the PTP packet is not a PTP packet of the device, the PTP packet only passes through the BC device. Therefore, the BC device does not need to perform PTP layer processing on the PTP packet. That is, the BC device ignores the PTP layer processing performed on the PTP packet that is not a PTP packet of the device, and directly forwards the PTP packet that is not a PTP packet of the device to a node device other than the clock device, where the node device other than the clock device is a next-hop node device of the clock device determined based on a routing relationship.

Step 24: The BC device terminates the PTP packet.

Because the BC device performs terminating processing on the PTP packet of the device in PTP communication, this step is compatible with the prior art to perform normal PTP layer processing on the PTP packet.

This embodiment is described by taking the BC device as an example. However, the solution of this embodiment is also applicable to an OC device, which is not described repeatedly here.

In this embodiment, the PTP packet that is not a PTP packet of the device is determined according to the domain number and the destination address, so that the BC device or the OC device processes the received PTP packet, thereby ensuring implementation of the end-to-end synchronization.

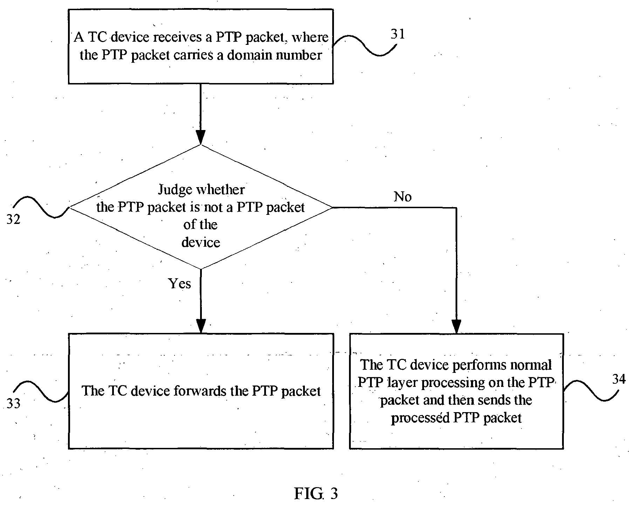

FIG. 3 is a schematic flowchart of a method according to a third embodiment of the present invention, including:
Step 31: A TC device receives a PTP packet, where the PTP packet carries a domain number.

It is understandable that the TC device performs forwarding processing on a PTP packet of the device, which is irrelevant to a destination address in the received PTP packet. Therefore, determining whether the received PTP packet is a PTP packet of the device is also irrelevant to the destination address.

Step 32: The TC device judges, according to the domain number carried in the PTP packet, whether the PTP packet is not a PTP packet of the device. If the PTP packet is not a PTP packet of the device, step 33 is performed. If the PTP packet is a PTP packet of the device, step 34 is performed.

Specifically, the TC device judges whether the domain number carried in the received PTP packet is the same as a domain number configured in the TC device itself. If a judgment result is that that domain number carried in the received PTP packet is the same as the domain number configured in the TC device itself, the received PTP packet is a PTP packet of the device. If the judgment result is that the domain number carried in the received PTP packet is different from the domain number configured in the TC device itself, the received PTP packet is not a PTP packet of the device.

Step 33: The TC device forwards the PTP packet.

The TC device may directly forward the PTP packet, or perform relevant information processing on the PTP packet and then forward the PTP packet. The relevant information processing refers to adding time delay information, adding time delay variation information, modifying packet dwell time, and so on. Specifically, whether the TC device directly forwards the PTP packet or forwards the PTP packet after performing the relevant information processing may be determined according to a network configuration.

Step 34: The TC device performs normal PTP layer processing on the PTP packet and then sends the processed PTP packet.

The normal PTP layer processing may be adding time delay information, adding time delay variation information, modifying packet dwell time, and so on.

Because the TC device performs the relevant information processing on a PTP packet of the device in PTP communication, this step is compatible with the prior art to perform normal PTP layer processing on the PTP packet.

In this embodiment, the PTP packet that is not a PTP packet of the device is determined according to the domain number, so that the TC device processes the received PTP packet, thereby ensuring implementation of end-to-end synchronization.

The preceding describes the processing processes of the BC device or OC device and the TC device, and based on the preceding principle, correct processing of the PTP packet may be performed in a hybrid network system. For example, end-to-end frequency synchronization is further implemented in a network system which is already configured with time synchronization. The time synchronization refers to adjusting phases of clock signals used by network element devices to be synchronized to be consistent, and the frequency synchronization refers to adjusting frequencies of the clock signals used by the network element devices to be synchronized to be consistent. A PTP packet used for time synchronization is called a time-synchronization PTP packet, and a PTP packet used for frequency synchronization is called a frequency-synchronization PTP packet.

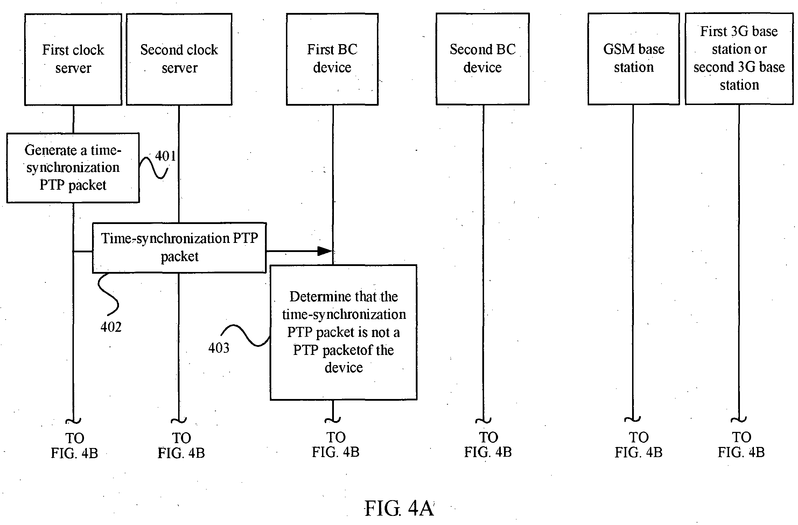

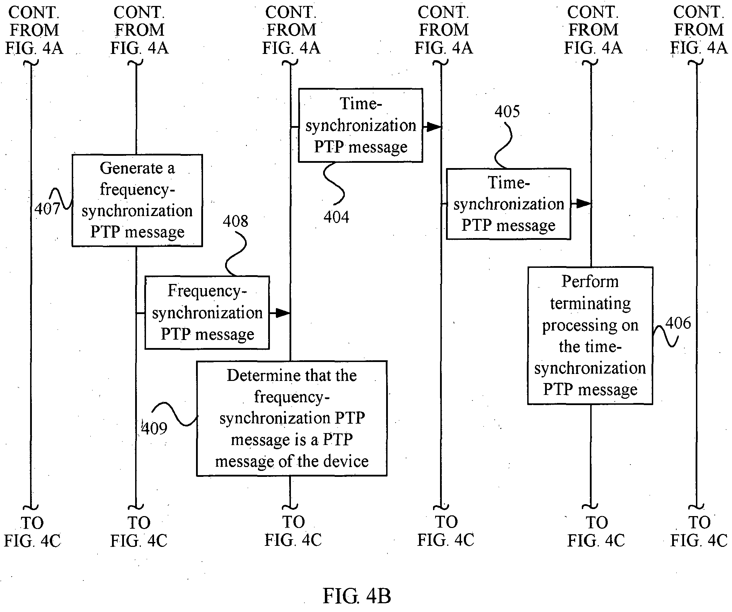

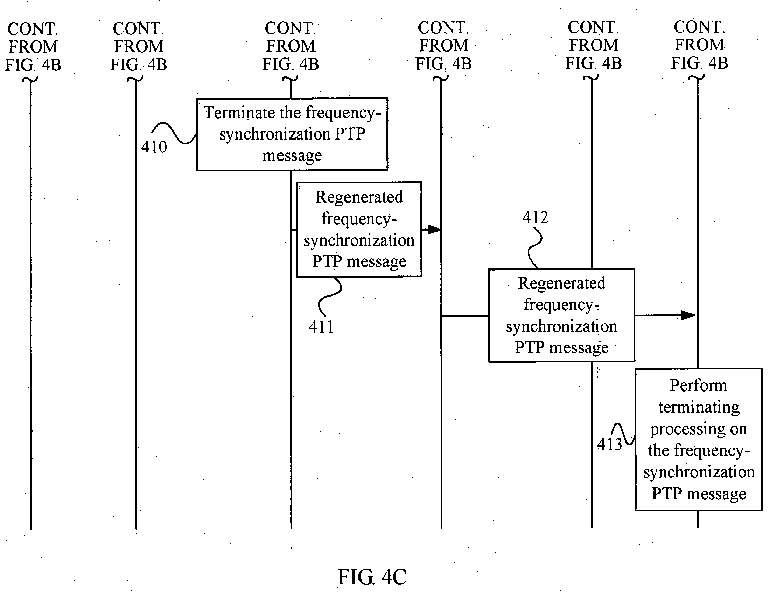

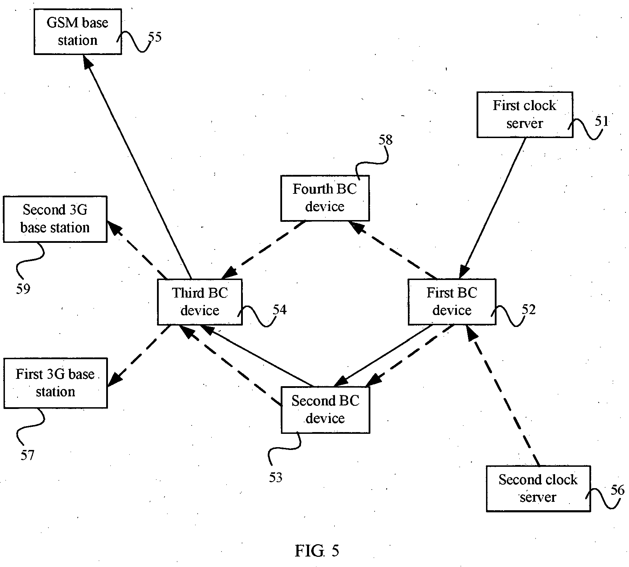

FIG. 4A, FIG. 4B, and FIG. 4C are a schematic flowchart of a method according to a fourth embodiment of the present invention. FIG. 5 is a schematic structural diagram of a system corresponding to the fourth embodiment of the present invention.

Referring to FIG. 5, a Global System for Mobile Communication (Global System for Mobile Communication, GSM) uses a layer 3 unicast mode to implement frequency synchronization. A path is: a first clock server (IPclk Server 1) 51 -> a first BC device 52 -> a second BC device 53 -> a third BC device 54 -> a GSM base station 55. A Time Division Synchronous Code Division Multiple Access (Time Division Synchronous Code Division Multiple Access, TD-SCDMA) system uses a layer 2 or layer 3 multicast mode to implement time synchronization. A path is: a second clock server (IPclk Server 2) 56 -> the first BC device 52, and afterward, the path is divided into two paths from the first BC device 52. One path is: the first BC device 52 -> the second BC device 53 -> the third BC device 54 -> a first 3G base station (NodeB) 57, and the other path is: the first BC device 52 -> a fourth BC device 58 -> the third BC device 54 -> a second 3G base station 59.

During system deployment, the clock server 51 and the GSM base station 55 are configured to have a same domain number, for example, DN 1; the second clock server 56, the first BC device 52, the second BC device 53, the third BC device 54, the fourth BC device 58, the first 3G base station 57, and the second 3G base station 59 are configured to have another same domain number, for example, DN 2. The first BC device 52, the second BC device 53, the third BC device 54, and the fourth BC device 58 are configured to be in a multicast mode.

During multicast, a destination address of a transmitted packet is an address compliant with a multicast protocol, that is, a class D IP address, ranging from 224.0.0.0 to 239.255.255.255; during unicast, the destination address of the transmitted packet is an IP address of the GSM base station.

The BC device involved in this embodiment may be a network element such as a router and a switch.

As shown in FIG. 4A, FIG. 4B, and FIG. 4C, this embodiment includes:
Step 401: The first clock server generates a time-synchronization PTP packet, where the time-synchronization PTP packet carries a domain number (DN 1) and a destination address (the IP address of the GSM base station) of the first clock server.
Step 402: The first clock server sends the time-synchronization PTP packet to the first BC device.
Step 403: Because the domain number (DN 1) carried in the time-synchronization PTP packet is different from a domain number (DN 2) configured in the first BC device itself, the first BC device determines that the time-synchronization PTP packet is not a PTP packet of the device.
Step 404: The first BC device sends the time-synchronization PTP packet to the second BC device.
Step 405: Similar to the first BC device, the second BC device and the third BC device perform the same processing until the time-synchronization PTP packet is sent to the GSM base station.

For a purpose of brevity, FIG 4A, FIG. 4B, and FIG. 4C do not show the third BC device and the fourth BC device. However, it is understandable that deployment and functionality of these devices are still able to be determined from the text part and therefore still fall within a coverage scope of this embodiment of the present invention.

Step 406: The GSM base station serves as an OC device, and after receiving the time-synchronization PTP packet, determines, according to the domain number and destination address carried in the time-synchronization PTP packet, that the time-synchronization PTP packet is a PTP packet of the device, and therefore performs terminating processing:

Because the domain number carried in the time-synchronization PTP packet is DN 1, which is the same as the domain number DN 1 configured in the GSM base station, the destination address carried in the time-synchronization PTP packet is the IP address of the GSM base station, and the GSM base station is configured to be in a unicast mode, the time-synchronization PTP packet is a PTP packet of the GMS base station.

Step 407: The second clock server generates a frequency-synchronization PTP packet, where the frequency-synchronization PTP packet carries a domain number (DN 2) and a destination address (a multicast address) of the second clock server.

Step 408: The second clock server sends the frequency-synchronization PTP packet to the first BC device.

Step 409: The first BC device determines, according to the domain number and destination address carried in the frequency-synchronization PTP packet, that the frequency-synchronization PTP packet is a PTP packet of the device.

Because the domain number carried in the frequency-synchronization PTP packet is the same as the domain number configured in the first BC device, the destination address carried in the frequency-synchronization PTP packet is a multicast address of the first BC device itself, and the first BC device is configured to be in the multicast mode, the frequency-synchronization PTP packet is a PTP packet of the first BC device.

Step 410: The first BC device terminates the frequency-synchronization PTP packet.

Step 411: The first BC device uses its own time information to regenerate a frequency-synchronization PTP packet, where the regenerated frequency-synchronization PTP packet carries a domain number DN 2 and a multicast address serving as a destination address, and then sends the regenerated frequency-synchronization PTP packet to the second BC device and the fourth BC device respectively.

Step 412: The second BC device and the third BC device, and the fourth BC device and the third BC device also perform the processing that is performed by the first BC device in the same way until the frequency-synchronization PTP packet (the regenerated frequency-synchronization PTP packet) is sent to the first 3G base station and the second 3G base station.

Step 413: The first 3G base station and the second 3G base station are OC devices, and after receiving the frequency-synchronization PTP packet, determine, according to the domain number and destination address carried in the frequency-synchronization PTP packet, that the frequency-synchronization PTP packet is a PTP packet of the device, and therefore perform the terminating processing.

Because the domain number carried in the frequency-synchronization PTP packet is DN 2, which is the same as the domain number DN 2 configured in the first 3G base station and the second 3G base station, the destination addresses carried in the frequency-synchronization PTP packet are multicast addresses of the first 3G base station and the second 3G base station respectively, and the first 3G base station and the second 3G base station are configured to be in the multicast mode, the frequency-synchronization PTP packet is a PTP packet of the first 3G base station and the second 3G base station.

No time sequence restriction relationship exists between steps 401-406 and steps 406-413.

In this embodiment, whether the PTP packet is not a PTP packet of the device is determined according to the domain number and the destination address; in a time synchronization system, end-to-end frequency synchronization may be further implemented smoothly when an intermediate node is a BC device.

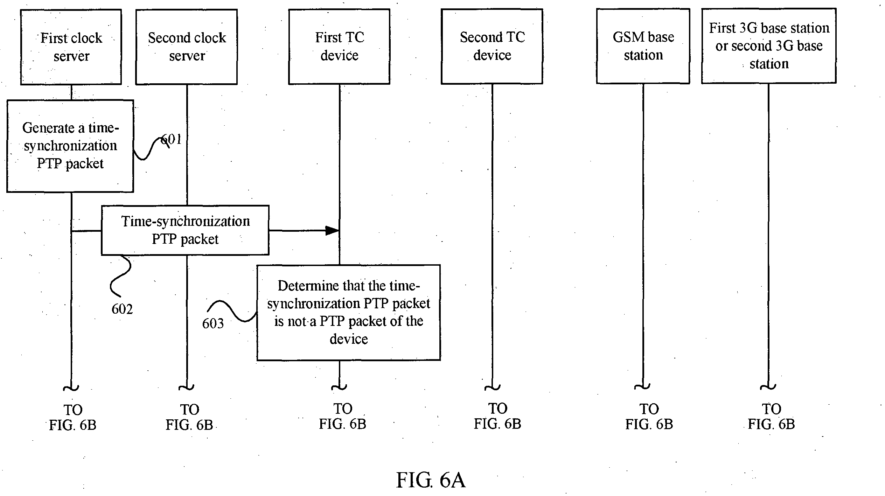

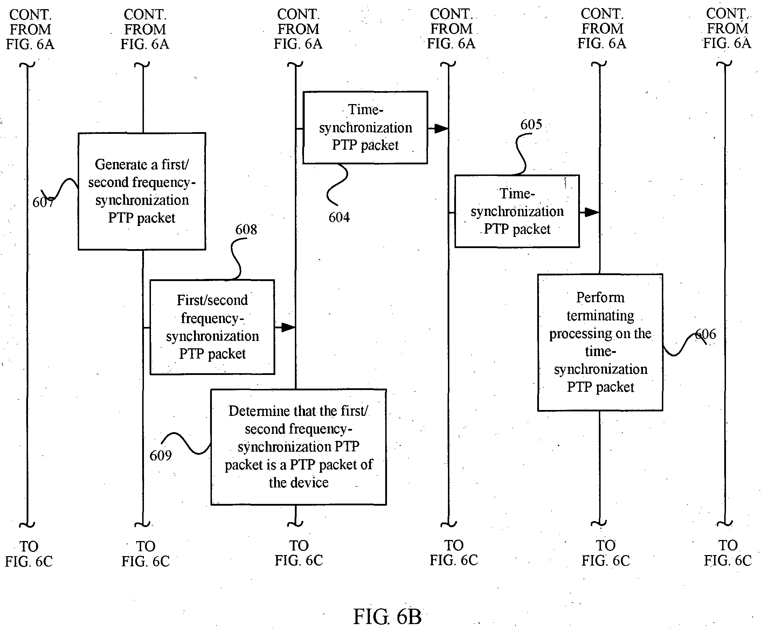

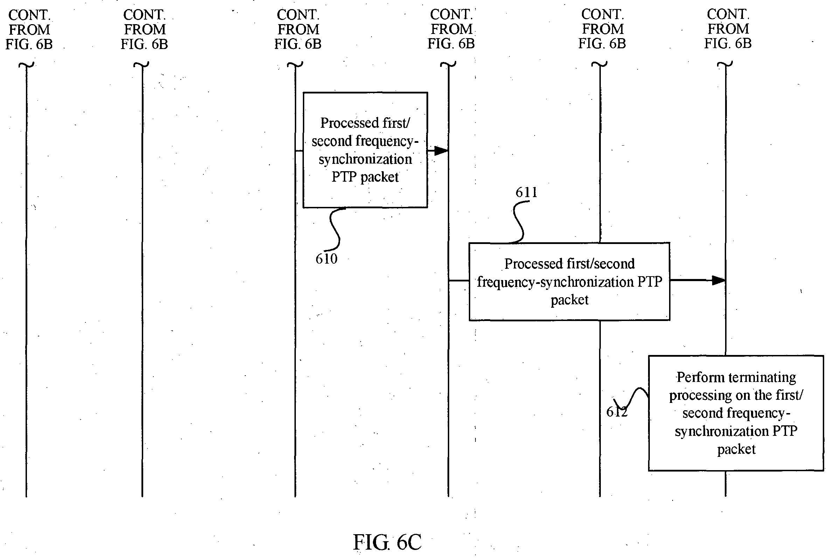

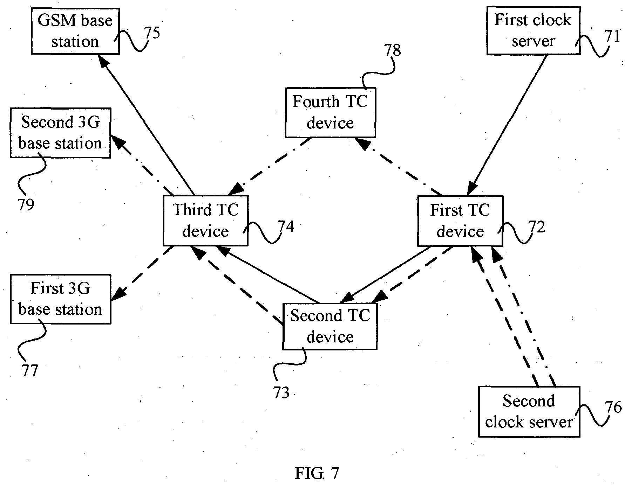

FIG. 6A, FIG. 6B, and FIG. 6C are a schematic flowchart of a method according to a fifth embodiment of the present invention. FIG. 7 is a schematic structural diagram of a system corresponding to the fifth embodiment of the present invention.

Referring to FIG. 7, a GSM system uses a layer 3 unicast mode to implement frequency synchronization. A path is: a first clock server (IPclk Server 1) 71 -> a first TC device 72 -> a second TC device 73 -> a third TC device 74 -> a GSM base station 75. A TD-SCDMA system uses a layer 2 or layer 3 unicast mode to implement time synchronization. Paths are: a second clock server (IPclk Server 2) 76 -> the first TC device 72 -> the second TC device 73 -> the third TC device 74 -> a first 3G base station (NodeB) 77, and the second clock server 76 -> the first TC device 72 -> the fourth TC device 78 -> the third TC device 74 -> a second 3G base station 79.

During system deployment, the first clock server 71 and the GSM base station 75 are configured to have a same domain number, for example, DN 1; the second clock server 76, the first TC device 72, the second TC device 73, the third TC device 74, the fourth TC device 78, the first 3G base station 77, and the second 3G base station 79 are configured to have another same domain number, for example, DN 2. The first TC device 72, the second TC device 73, the third TC device 74, the fourth TC device 78, the GSM base station 75, the first 3G base station, and the second 3G base station are configured to be in a unicast mode.

During unicast, destination addresses of the transmitted packet are an IP address of the GSM base station, an IP address of the first 3G base station, and an IP address of the second 3G base station respectively.

The TC device involved in this embodiment may be a network element such as a router and a switch.

As shown in FIG. 6A, FIG. 6B, and FIG. 6C, this embodiment includes:
Step 601: The first clock server generates a time-synchronization PTP packet, where the time-synchronization PTP packet carries a domain number (DN 1) and a destination address (the IP address of the GSM base station) of the first clock server.
Step 602: The first clock server sends the time-synchronization PTP packet to a first TC device.
Step 603: Because the domain number (DN 1) carried in the time-synchronization PTP packet is different from a domain number (DN 2) configured in the first TC device itself, the first TC device determines that the time-synchronization PTP packet is not a PTP packet of the device.
Step 604: The first TC device sends the time-synchronization PTP packet to the second TC device.
Step 605: Similar to the first TC device, the second TC device and the third TC device perform the same processing until the time-synchronization PTP packet is sent to the GSM base station.

For the PTP packet that is not a PTP packet of the device, the TC device may directly perform transparent transmission, or may perform relevant information processing and then perform transmission.

Step 606: The GSM base station serves as an OC device, and after receiving the time-synchronization PTP packet, determines, according to the domain number and destination address carried in the time-synchronization PTP packet, that the time-synchronization PTP packet is a PTP packet of the device, and therefore performs terminating processing.

Because the domain number carried in the time-synchronization PTP packet is DN 1, which is the same as the domain number DN 1 configured in the GSM base station, the destination address carried in the time-synchronization PTP packet is the IP address of the GSM base station, and the GSM base station is configured to be in the unicast mode, the time-synchronization PTP packet is a PTP packet of the GMS base station.

Step 607: The second clock server generates a first frequency-synchronization PTP packet and a second frequency-synchronization PTP packet, where the first frequency-synchronization PTP packet and the second frequency-synchronization PTP packet respectively carry a domain number and a destination address, both the domain number carried in the first frequency-synchronization PTP packet and that carried in the second frequency-synchronization PTP packet are the domain number (DN 2) of the second clock server, and the destination addresses are the IP address of the first 3G base station and the IP address of the second 3G base station respectively.

Step 608: The second clock server sends both the first frequency-synchronization PTP packet and the second frequency-synchronization PTP packet to the first TC device.

Step 609: The first TC device determines, according to the domain numbers carried in the first frequency-synchronization PTP packet and the second frequency-synchronization PTP packet, that the first frequency-synchronization PTP packet and the second frequency-synchronization PTP packet are PTP packets of the device.

Because the domain numbers carried in the first frequency-synchronization PTP packet and the second frequency-synchronization PTP packet are the same as the domain number configured in the first TC device, the first frequency-synchronization PTP packet and the second frequency-synchronization PTP packet are PTP packets of the first TC device.

Step 610: After performing normal PTP layer processing on the first frequency-synchronization PTP packet and the second frequency-synchronization PTP packet, the first TC device respectively sends the processed first frequency-synchronization PTP packet and second frequency-synchronization PTP packet to the second TC device and the fourth TC device.

Step 611: The second TC device and the third TC device, and the fourth TC device and the third TC device also perform the processing that is performed by the first TC device in the same way until the first frequency-synchronization PTP packet and the second frequency-synchronization PTP packet are respectively sent to the first 3G base station and the second 3G base station.

For a purpose of brevity, FIG. 6A, FIG. 6B, and FIG. 6C do not show the third TC device and the fourth TC device. However, it is understandable that deployment and functionality of these devices are still able to be determined from the text part, and therefore still fall within a coverage scope of this embodiment of the present invention.

Step 612: The first 3G base station and the second 3G base station are OC devices, and after respectively receiving the first frequency-synchronization PTP packet and the second frequency-synchronization PTP packet, determine, according to the domain number and destination address carried in the first frequency-synchronization PTP packet or the second frequency-synchronization PTP packet, that the first frequency-synchronization PTP packet or the second frequency-synchronization PTP packet is a PTP packet of the devices, and therefore perform the terminating processing.

Because the domain numbers carried in the first frequency-synchronization PTP packet and the second frequency-synchronization PTP packet are DN 2, which is the same as the domain number DN 2 configured in the first 3G base station and the second 3G base station, the destination addresses carried in the first frequency-synchronization PTP packet and the second frequency-synchronization PTP packet are the IP address of the first 3G base station and the IP address of the second 3G base station respectively, and the first 3G base station and the second 3G base station are configured to be in the unicast mode, the first frequency-synchronization PTP packet and second frequency-synchronization PTP packet are a PTP packet of the first 3G base station and a PTP packet of the second 3G base station respectively.

In this embodiment, the OC device determines, according to the domain number and the destination address, whether the PTP packet is not a PTP packet of the device; the TC device determines, according to the domain number, whether the PTP packet is not a PTP packet of the device. In this case, in a time synchronization system, end-to-end frequency synchronization may be further implemented smoothly when an intermediate node is a BC device.

The fourth embodiment and the fifth embodiment respectively take the BC device and the TC device that serve as intermediate nodes as examples, and the end-to-end frequency synchronization is further implemented in a system which is already configured with time synchronization. It is understandable that the principle of the embodiments of the present invention may still be used to further implement the end-to-end time synchronization in a system which is already configured with frequency synchronization.

A module performing the preceding processing on the clock device may specifically be a packet processing apparatus. In the prior art, a packet processing apparatus also exists in the clock device, but the packet processing apparatus in the prior art only processes the PTP packet of the device and cannot determine and process the PTP packet that is not a PTP packet of the device. In the preceding embodiment, the packet processing apparatus is improved to determine and process the PTP packet that is not a PTP packet of the device, and thereby smooth proceeding of end-to-end synchronization is ensured.

Different from the preceding embodiments, an embodiment of the present invention may further provide a method for processing a PTP packet. This method is adding or extending an existing address matching apparatus in the clock device, so that the address matching apparatus provided in this embodiment of the present invention may be used for determining and processing a PTP packet that is not a PTP packet of the device.

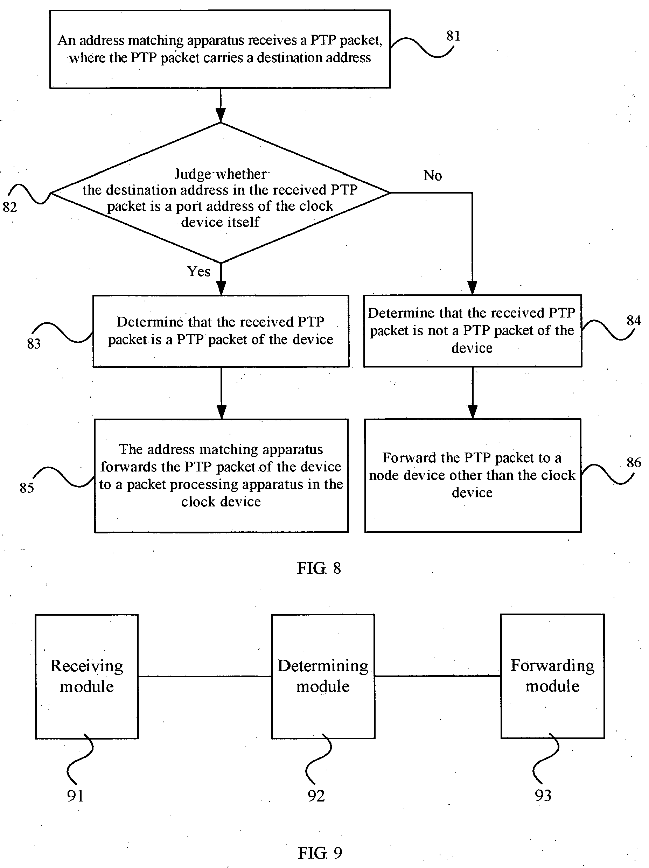

FIG. 8 is a schematic flowchart of a method according to a sixth embodiment of the present invention, including:
Step 81: The address matching apparatus in the clock device receives a PTP packet, where the PTP packet carries a destination address.
Step 82: The address matching apparatus judges whether a destination address in the received PTP packet is a port address of the clock device itself If the destination address in the received PTP packet is the port address of the clock device itself, step 83 is performed; if the destination address in the received PTP packet is not the port address of the clock device itself, step 84 is performed.
Step 83: The address matching apparatus determines that the received PTP packet is a PTP packet of the device. Then, step 85 is performed.
Step 84: The address matching apparatus determines that the received PTP packet is not a PTP packet of the device. Then, step 86 is performed.
Step 85: The address matching apparatus forwards the PTP packet of the device to a packet processing apparatus in the clock device, so that the packet processing apparatus performs normal PTP processing on the PTP packet of the device. Then, the process ends.
Step 86: The address matching apparatus forwards the PTP packet that is not a PTP packet of the device to a node device other than the clock device.

The node device other than the clock device is a next-hop node of the clock device determined based on information such as route information.

In this embodiment, the clock device may be a BC device, an OC device, or a TC device.

In this embodiment, whether a PTP packet is not a PTP packet of the device is determined by using an address matching manner, which may also implement determining and processing of the PTP packet that is not a PTP packet of the device and ensure implementation of end-to-end synchronization. In this embodiment, domain numbers do not need to be compared and therefore execution is simple and convenient.

FIG. 9 is a schematic structural diagram of a clock device according to a seventh embodiment of the present invention. The clock device includes a receiving module 91, a determining module 92, and a forwarding module 93. The receiving module 91 is configured to receive a Precision Time Protocol PTP packet, where the Precision Time Protocol packet carries end-to-end parameter information. The determining module 92 is configured to determine, according to the end-to-end parameter information, whether the received Precision Time Protocol packet is not a Precision Time Protocol packet of the device. The forwarding module 93 is configured to forward the Precision Time Protocol packet that is not a Precision Time Protocol packet of the device when the received Precision Time Protocol packet is not a Precision Time Protocol packet of the device.

In this embodiment, the PTP packet that is not a PTP packet of the device is determined according to the end-to-end parameter information and forwarding processing is performed on the PTP packet that is not a PTP packet of the device, which implements determining and processing of the PTP packet that is not a PTP packet of the device. This may avoid a problem of discarding a PTP packet that is not a PTP packet of the device and ensure implementation of end-to-end synchronization.

In specific implementation, respective deployment may be performed based on different clock devices.

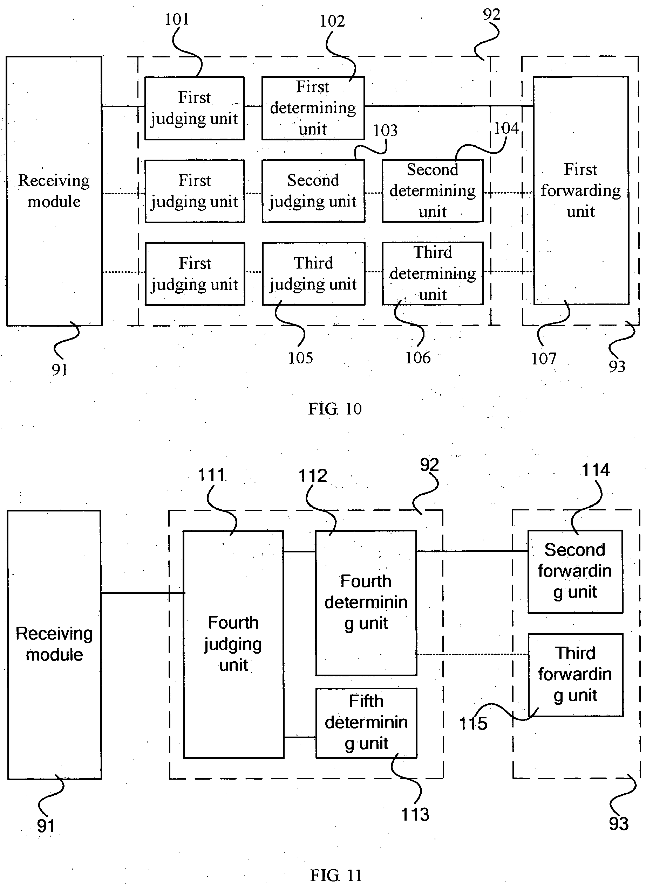

FIG. 10 is a schematic structural diagram of a clock device according to an eighth embodiment of the present invention. The clock device may be a BC device or an OC device, and in this case, the end-to-end parameter information includes a domain number and a destination address.

In this case, the determining module 92 includes a first judging unit 101 and a first determining unit 102, where the first judging unit 101 is configured to judge whether the domain number is the same as a domain number configured in the clock device itself, and the first determining unit 102 is configured to determine that a received PTP packet is not a PTP packet of the device when a judgment result obtained by the first judging unit 101 is that the domain number is different from the domain number configured in the clock device itself;
or, the determining module 92 includes the first judging unit 101, a second judging unit 103, and a second determining unit 104, where the second judging unit 103 is configured to further judge whether the destination address is a multicast address of the clock device itself when the judgment result obtained by the first judging unit 101 is that the domain number is the same as the domain number configured in the clock device itself and the clock device is in a multicast mode, and the second determining unit 104 is configured to determine that the received PTP packet is not a PTP packet of the device when a judgment result obtained by the second judging unit 103 is that the destination address is not the multicast address of the clock device itself;
or, the determining module includes the first judging unit 101, a third judging unit 105, and a third determining unit 106, where the third judging unit 105 is configured to further judge whether the destination address is a port address of the clock device itself when the judgment result obtained by the first judging unit 101 is that the domain number is the same as the domain number configured in the clock device itself and the clock device is in a unicast mode, and the third determining unit 106 is configured to determine that the received PTP packet is not a PTP packet of the device when a judgment result obtained by the third judging unit 105 is that the destination address is not the port address of the clock device itself.

The forwarding module 93 includes a first forwarding unit 107, where the first forwarding unit 107 is configured to ignore PTP layer processing on the PTP packet that is not a PTP packet of the device and directly forward the PTP packet that is not a PTP packet of the device to a node device other than the clock device.

In this embodiment, the PTP packet that is not a PTP packet of the device is determined according to the domain number and the destination address, so that the BC device or the OC device processes the received PTP packet, thereby ensuring implementation of end-to-end synchronization.

FIG. 11 is a schematic structural diagram of a clock device according to a ninth embodiment of the present invention. The clock device is a TC device, and in this case, the end-to-end parameter information includes a domain number.

In this case, the determining module 92 includes a fourth judging unit 111, a fourth determining unit 112, and a fifth determining unit 113. The fourth judging unit 111 is configured to judge whether the domain number is the same as a domain number configured in the TC device itself The fourth determining unit 112 is configured to determine that a received PTP packet is not a PTP packet of the device when a judgment result obtained by the fourth judging unit 111 is that the domain number is different from the domain number configured in the TC device itself. The fifth determining unit 113 is configured to determine that the received PTP packet is a PTP packet of the device when the judgment result obtained by the fourth judging unit 111 is that the domain number is the same as the domain number configured in the TC device itself

The forwarding module 93 includes a second forwarding unit 114 or a third forwarding unit 115. The second forwarding unit 114 is configured to ignore PTP layer processing on the PTP packet that is not a PTP packet of the device and directly forward the PTP packet that is not a PTP packet of the device to a node device other than the TC device. The third forwarding unit 115 is configured to perform normal PTP layer processing on the PTP packet that is not a PTP packet of the device and forward the processed PTP packet that is not a PTP packet of the device to a node device other than the TC device.

In this embodiment, the PTP packet that is not a PTP packet of the device is determined according to the domain number, so that the TC device processes the received PTP packet, thereby ensuring implementation of end-to-end synchronization.

Each module involved in the embodiment of FIG. 10 or FIG. 11 may be specifically located in the packet processing apparatus of the clock device.

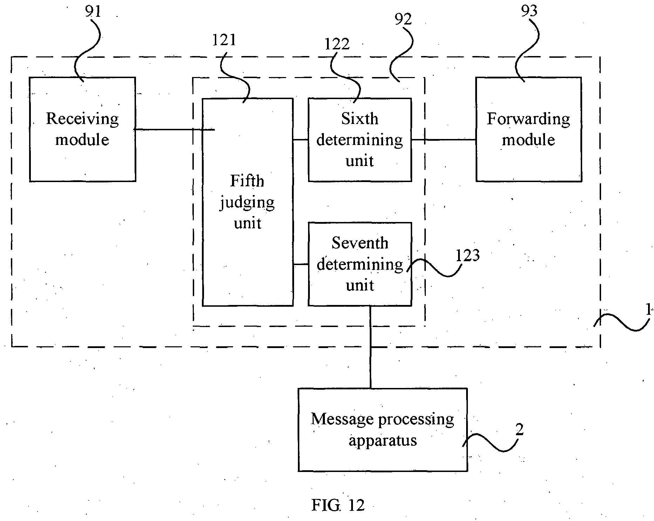

FIG. 12 is a schematic structural diagram of a clock device according to a tenth embodiment of the present invention. The clock device is a BC device, an OC device or a TC device, and in this case, the end-to-end parameter information includes a destination address.

In this case, the determining module 92 includes a fifth judging unit 121 and a sixth determining unit 122. The fifth judging unit 121 is configured to judge whether the destination address is a port address of the clock device itself. The sixth determining unit 122 is configured to, determine that a PTP packet received by the clock device is not a PTP packet of the device when a judgment result obtained by the fifth judging unit 121 is that the destination address is not the port address of the clock device itself.

The modules (including the receiving module 91, the determining module 92, and the forwarding module 93) involved in this embodiment may be specifically located in an address matching apparatus 1 of the clock device. The clock device further includes a packet processing apparatus 2, and the address matching apparatus 1 may further include: a seventh determining unit 123, configured to determine that the received PTP packet is a PTP packet of the device when the judgment result obtained by the fifth judging unit 121 is that the destination address is the port address of the clock device itself, and forward the PTP packet of the device to the packet processing apparatus 2 in the clock device, so that the packet processing apparatus 2 performs normal PTP layer processing on the PTP packet of the device.

In this embodiment, whether a PTP packet is not a PTP packet of the device is determined by using an address matching manner, which may also implement determining and processing of the PTP packet that is not a PTP packet of the device and ensure implementation of end-to-end synchronization. In this embodiment, domain numbers do not need to be compared and therefore execution is simple and convenient.

An embodiment of the present invention further provides another implementation solution (which may be called "a profile implementation solution").

In the implementation solution, a clock device may be an ordinary clock OC device or a boundary clock BC device or a transparent clock TC device, a PTP packet is a PTP message sent by a master clock or a slave clock, and end-to-end parameter information includes profile information in the PTP message. The clock device may determine, according to the end-to-end parameter information, whether a received PTP packet is not a PTP packet of the device.

Specifically, the profile information may be a type-length-value TLV field including a profile ID; accordingly, the clock device may judge, according to the profile information in the PTP message, whether the PTP message is relevant to (or is not a PTP packet of the device) the device. For example, if the profile ID included in the TLV field matches a profile ID configured in the clock device, it is determined that the PTP message is relevant to the device; if the profile ID included in the TLV field does not match a profile ID configured in the clock device, it is determined that the PTP message is irrelevant to the device.

In addition, for the TC device, the step of forwarding the PTP packet that is not a PTP packet of the device may include the following: The TC device ignores PTP layer processing on the PTP packet that is not a PTP packet of the device and directly forwards the PTP packet that is not a PTP packet of the device to a node device other than the TC device; or the TC device performs normal PTP layer processing on the PTP packet that is not a PTP packet of the device and forwards the processed PTP packet that is not a PTP packet of the device to a node device other than the TC device.

For example, a TLV field is added to a 1588 packet:
1. A new TLV (Type-Length-Value, type-length-value) field is added to a 1588 packet, where a 1588 profile ID corresponding to the packet is carried, and a network device may check the profile ID.
2. When the network device is in a BC mode (that is, the network device is a BC device) or an OC mode (that is, the network device is an OC device), if the profile ID in the packet matches a profile ID configured in the network device, the network device may perform terminating processing on the packet; if the profile ID in the packet does not match a profile ID configured in the network device, the network device may perform forwarding processing on (or "transparently transmit") the packet, and in this case, 1588V2 protocol layer processing is not performed.
3. When the network device is in a TC mode (that is, the network device is a TC device), if the profile ID in the packet matches the profile ID configured in the network device, the network device may modify packet dwell time and perform processing based on the normal 1588V2 protocol. If the profile ID in the packet does not mates the profile ID configured in the network device, the network device may perform forwarding processing on (or "transparently transmit") the packet, or may also perform processing based on the normal 1588V2 protocol, and the specific behavior may be normalized through a network configuration.

The following is an application of the solution in a specific scenario:

In the technical solutions corresponding to FIG. 4A, FIG. 4B, FIG. 4C, and FIG. 5, the GSM system uses the layer 3 unicast mode to implement the frequency synchronization. The path is: the first clock server 51 -> the first BC device 52 -> the second BC device 53 -> the third BC device 54 -> the GSM base station 55. The TD-SCDMA system uses the layer 2 or layer 3 multicast mode to implement the time synchronization. The path is: the second clock server 56 -> the first BC device 52, and afterward, the path is divided into two paths from the first BC device 52. One path is: the first BC device 52 -> the second BC device 53 -> the third BC device 54 -> the first 3G base station (NodeB) 57, and the other path is: the first BC device 52 -> the fourth BC device 58 -> the third BC device 54 -> the second 3G base station 59.

It is understandable that a principle of performing terminating processing on a PTP packet by the OC device is similar to a principle of performing terminating processing on a PTP packet by the BC device. This embodiment of the present invention mainly takes the BC device as an example for description but is not limited thereto.

During system deployment, the first clock server 51 and the GSM base station 55 are configured to have the same domain number, for example, DN 1; the second clock server 56, the first BC device 52, the second BC device 53, the third BC device 54, the fourth BC device 58, the first 3G base station 57, and the second 3G base station 59 are configured to have another same domain number, for example, DN 2. The first BC device 52, the second BC device 53, the third BC device 54, and the fourth BC device 58 are configured to be in the multicast mode.

During multicast, the destination address of the transmitted packet is an address compliant with the multicast protocol, that is, a class D IP address, ranging from 224.0.0.0 to 239.255.255.255; during unicast, the destination address of the transmitted packet is the IP address of the GSM base station.

In this case, because the first clock server 51 and the GSM base station involved in unicast and a network element (such as a BC device) involved in multicast belong to different telecom profiles, different profile IDs may be configured.

According to the "profile implementation solution" provided in this embodiment of the present invention, a TLV field including a profile ID may be added to a 1588 packet sent by the first clock server 51, and an intermediate BC device may judge whether the profile ID in the packet matches a profile ID of the BC device.

In this embodiment, because the profile ID of the BC device matches only a profile ID of a multicast packet, the intermediate BC node terminates only the multicast packet and transparently transmits a unicast packet after comparing the profile IDs.

In the technical solutions corresponding to FIG. 6A, FIG. 6B, FIG. 6C, and FIG. 7, the GSM system uses the layer 3 unicast mode to implement the frequency synchronization. The path is: the first clock server 71 -> the first TC device 72 -> the second TC device 73 -> the third TC device 74 -> the GSM base station 75. The TD-SCDMA system uses the layer 2 or layer 3 unicast mode to implement the time synchronization. The path is: the second clock server (IPclk Server 2) 76 -> the first TC device 72 -> the second TC device 73 -> the third TC device 74 -> the first 3G base station (NodeB) 77, and the second clock server 76 -> the first TC device 72 -> the fourth TC device 78 -> the third TC device 74 -> the second 3G base station 79.

During system deployment, the first clock server 71 and the GSM base station 75 are configured to have the same domain number, for example, DN 1; the second clock server 76, the first TC device 72, the second TC device 73, the third TC device 74, the fourth TC device 78, the first 3G base station 77, and the second 3G base station 79 are configured to have another same domain number, for example, DN 2. The first TC device 72, the second TC device 73, the third TC device 74, the fourth TC device 78, the GSM base station 75, the first 3G base station, and the second 3G base station are configured to be in the unicast mode.

During unicast, the destination addresses of the transmitted packet are the IP address of the GSM base station, the IP address_of the first 3G base station, and the IP address of the second 3G base station respectively.

In this case, because the first clock server 71 and the GSM base station involved in unicast and a network element (such as a TC device) involved in multicast belong to different telecom profiles, different profile IDs may be configured.

According to the "profile implementation solution" provided in this embodiment of the present invention, a TLV field including a profile ID may be added to a 1588 packet sent by the first clock server 71, and an intermediate TC node may judge whether the profile ID in the packet matches a profile ID of the TC device.

In this embodiment, because the profile ID of the TC device matches only a profile ID of a multicast packet, the intermediate TC node processes dwell time of the multicast packet and directly and transparently transmits a unicast packet after comparing profile IDs. Of course, if a configuration of the intermediate TC node definitely requires processing performed on a packet that is not a packet of the device, in this embodiment, even if the intermediate TC node finds that the packet is an unmatched unicast packet after comparing the profile IDs, the dwell time of the packet may also be processed according to a protocol.

In addition, for a device embodiment, a profile judging unit and a profile determining unit may be configured in the determining module to implement the "profile implementation solution".

The determining module includes the profile judging unit and the profile determining unit. The profile judging unit is configured to judge, according to the profile information in the PTP message, whether the PTP message is relevant to the device. The profile determining unit is configured to determine that the received PTP packet is not a PTP packet of the device when a judgment result obtained by the profile judging unit is that the PTP message is irrelevant to the device.

Accordingly, the forwarding module may include a second forwarding unit or a third forwarding unit, where the second forwarding unit is configured to ignore PTP layer processing on the PTP packet that is not a PTP packet of the device and directly forward the PTP packet that is not a PTP packet of the device to a node device other than the TC device, and the third forwarding unit is configured to perform normal PTP layer processing on the PTP packet that is not a PTP packet of the device and forward the processed PTP packet that is not a PTP packet of the device to a node device other than the TC device.

It is understandable that the preceding embodiments may be applied in different systems, for example, a GSM system, a WCDMA system, or a Long Term Evolution (Long Term Evolution, LTE) system, or applied in a hybrid network system of the preceding systems.

Persons of ordinary skill in the art may understand that all or a portion of the steps in the methods of the preceding embodiments may be implemented by hardware instructed by a program. The program may be stored in a computer readable storage medium and when the program is executed, the steps in the methods of the preceding embodiments are performed. The storage medium includes any medium that is capable of storing a program code, such as a ROM, a RAM, a magnetic disk, or a CD-ROM. Finally, it should be noted that the preceding embodiments of the present invention are merely intended for describing the technical solutions of the present invention rather than limiting the present invention. Although the present invention is described in detail with reference to exemplary embodiments, persons of ordinary skill in the art should understand that modifications or substitutions can be made to the technical solutions of the present invention without departing from the scope of the technical solutions of the present invention.

## Claims

1. A method for processing a Precision Time Protocol, PTP, packet, comprising:
receiving, by a clock device, a PTP packet, wherein the PTP packet carries end-to-end parameter information, wherein the end-to-end parameter information comprises a domain number; the method **characterized by**:
judging, by the clock device, whether the domain number is the same as a domain number configured in the clock device itself;
if a judgment result is that the domain number is different from the domain number configured in the clock device itself, determining that the received PTP packet is not a PTP packet of the device; and
forwarding, by the clock device, the PTP packet that is not a PTP packet of the device when the received PTP packet is not a PTP packet of the device.

2. The method according to claim 1, wherein the clock device is an ordinary clock OC device or a boundary clock BC device, and the end-to-end parameter information further comprises a destination address; and
if a judgment result is that the domain number is the same as the domain number configured in the clock device itself and the clock device is in a multicast mode, further judging whether the destination address is a multicast address of the clock device itself; and
if a judgment result is that the destination address is not the multicast address of the clock device itself, determining that the received PTP packet is not a PTP packet of the device;
or,
if a judgment result is that the domain number is the same as the domain number configured in the clock device itself and the clock device is in a unicast mode, further judging whether the destination address is a port address of the clock device itself; and
if a judgment result is that the destination address is not a port address of the clock device itself, determining that the received PTP packet is not a PTP packet of the device.

3. The method according to claim 2, wherein the forwarding the PTP packet that is not a PTP packet of the device comprises:
ignoring, by the clock device, PTP layer processing on the PTP packet that is not a PTP packet of the device, and directly forwarding the PTP packet that is not a PTP packet of the device to a node device other than the clock device.

4. The method according to claim 1, wherein the clock device is a transparent clock TC device; and
if the judgment result is that the domain number is the same as the domain number configured in the TC device, determining that the received PTP packet is a PTP packet of the device.

5. The method according to claim 4, wherein the forwarding the PTP packet that is not a PTP packet of the device comprises:
ignoring, by the TC device, PTP layer processing on the PTP packet that is not a PTP packet of the device, and directly forwarding the PTP packet that is not a PTP packet of the device to a node device other than the clock device;
or,
performing, by the TC device, normal PTP layer processing on the PTP packet that is not a PTP packet of the device, and forwarding the processed PTP packet that is not a PTP packet of the device to a node device other than the clock device.

6. A clock device, comprising:
a receiving moduler (91), configured to receive a Precision Time Protocol, PTP, packet, wherein the PTP packet carries end-to-end parameter information, wherein the end-to-end parameter information comprises a domain number; the clock device **characterised by**:
a determining module (92), configured to judge whether the domain number is the same as a domain number configured in the clock device itself and to determine that the received PTP packet is not a PTP packet of the device when a judgment result is that the domain number is different from the domain number configured in the clock device itself; and
a forwarding module (93), configured to forward the PTP packet that is not a PTP packet of the device when the received PTP packet is not a PTP packet of the device.

7. The device according to claim 6, wherein the clock device is an ordinary clock OC device or a boundary clock BC device, and the end-to-end parameter information further comprises a destination address; and
the determining module is configured to further judge whether the destination address is a multicast address of the clock device itself when the judgment result is that the domain number is the same as the domain number configured in the clock device itself and the clock device is in a multicast mode, and to determine that the received PTP packet is not a PTP packet of the device when a judgment result is that the destination address is not the multicast address of the clock device itself;
or,
the determining module is configured to further judge whether the destination address is a port address of the clock device itself when the judgment result is that the domain number is the same as the domain number configured in the clock device itself and the clock device is in a unicast mode, and to determine that the received PTP packet is not a PTP packet of the device when a judgment result is that the destination address is not the port address of the clock device itself.

8. The device according to claim 7, wherein:
the forwarding module comprises a first forwarding unit, wherein the first forwarding unit is configured to ignore PTP layer processing on the PTP packet that is not a PTP packet of the device and directly forward the PTP packet that is not a PTP packet of the device to a node device other than the clock device.

9. The device according to claim 6, wherein the clock device is a transparent clock TC device; and
the determining module is configured to determine that the received PTP packet is a PTP packet of the device when the judgment result is that the domain number is the same as the domain number configured in the TC device itself.

10. The device according to claim 9, wherein:
the forwarding module comprises a second forwarding unit or a third forwarding unit; wherein
the second forwarding unit is configured to ignore PTP layer processing on the PTP packet that is not a PTP packet of the device, and directly forward the PTP packet that is not a PTP packet of the device to a node device other than the TC device; and
the third forwarding unit is configured to perform normal PTP layer processing on the PTP packet that is not a PTP packet of the device, and forward the processed PTP packet that is not a PTP packet of the device to a node device other than the TC device.

## Patentansprüche

1. Verfahren zum Verarbeiten eines Präzisions-Zeit-Protokoll-, PTP-, Pakets, das Folgendes umfasst:
Empfangen, durch eine Taktvorrichtung, eines PTP-Pakets, wobei das PTP-Paket durchgängige Parameterinformationen trägt, wobei die durchgängigen Parameterinformationen eine Domänennummer umfassen, wobei das Verfahren durch Folgendes gekennzeichnet ist:
Beurteilen, durch die Taktvorrichtung, ob die Domänennummer dieselbe wie eine in der Taktvorrichtung selbst konfigurierte Domänennummer ist;
falls ein Beurteilungsergebnis ist, dass sich die Domänennummer von der in der Taktvorrichtung selbst konfigurierten Domänennummer unterscheidet, Bestimmen, dass das empfangene PTP-Paket kein PTP-Paket der Vorrichtung ist; und
Weiterleiten, durch die Taktvorrichtung, des PTP-Pakets, das kein PTP-Paket der Vorrichtung ist, wenn das empfangene PTP-Paket kein PTP-Paket der Vorrichtung ist.

2. Verfahren nach Anspruch 1, wobei die Taktvorrichtung eine gewöhnliche Taktvorrichtung oder OC-Vorrichtung oder eine Grenz-Takt-Vorrichtung oder BC-Vorrichtung ist und die durchgängigen Parameterinformationen ferner eine Zieladresse umfassen; und
falls ein Beurteilungsergebnis ist, dass die Domänennummer dieselbe wie die in der Taktvorrichtung selbst konfigurierte Domänennummer ist und sich die Taktvorrichtung in einem Mehrsende-Modus befindet, ferner Beurteilen, ob die Zieladresse eine Mehrsendeadresse der Taktvorrichtung selbst ist; und
falls ein Beurteilungsergebnis ist, dass die Zieladresse nicht die Mehrsendeadresse der Taktvorrichtung ist, Bestimmen, dass das empfangene PTP-Paket kein PTP-Paket der Vorrichtung ist;
oder
falls ein Beurteilungsergebnis ist, dass die Domänennummer dieselbe wie die in der Taktvorrichtung selbst konfigurierte Domänennummer ist und sich die Taktvorrichtung in einem Einzelsende-Modus befindet, ferner Beurteilen, ob die Zieladresse eine Anschlussadresse der Taktvorrichtung selbst ist; und
falls ein Beurteilungsergebnis ist, dass die Zieladresse keine Anschlussadresse der Taktvorrichtung selbst ist, Bestimmen, dass das empfangene PTP-Paket kein PTP-Paket der Vorrichtung ist.

3. Verfahren nach Anspruch 2, wobei das Weiterleiten des PTP-Pakets, das kein PTP-Paket der Vorrichtung ist, Folgendes umfasst:
Ignorieren, durch die Taktvorrichtung, von PTP-Schichtverarbeiten an dem PTP-Paket, das kein PTP-Paket der Vorrichtung ist, und direktes Weiterleiten des PTP-Pakets, das kein PTP-Paket der Vorrichtung ist, an eine andere Knotenvorrichtung als die Taktvorrichtung.

4. Verfahren nach Anspruch 1, wobei die Taktvorrichtung eine transparente Taktvorrichtung oder TC-Vorrichtung ist; und
falls das Beurteilungsergebnis ist, dass die Domänennummer dieselbe wie die in der TC-Vorrichtung konfigurierte Domänennummer ist, Bestimmen, dass das empfangene PTP-Paket ein PTP-Paket der Vorrichtung ist.

5. Verfahren nach Anspruch 4, wobei das Weiterleiten des PTP-Pakets, das kein PTP-Paket der Vorrichtung ist, Folgendes umfasst:
Ignorieren, durch die TC-Vorrichtung, des PTP-Schichtverarbeitens an dem PTP-Paket, das kein PTP-Paket der Vorrichtung ist, und direktes Weiterleiten des PTP-Pakets, das kein PTP-Paket der Vorrichtung ist, an eine andere Knotenvorrichtung als die Taktvorrichtung;
oder
Durchführen, durch die TC-Vorrichtung, normalen PTP-Schichtverarbeitens an dem PTP-Paket, das kein PTP-Paket der Vorrichtung ist, und Weiterleiten des verarbeiteten PTP-Pakets, das kein PTP-Paket der Vorrichtung ist, an eine andere Knotenvorrichtung als die Taktvorrichtung.

6. Taktvorrichtung, die Folgendes umfasst:
ein Empfangsmodul (91), das ausgelegt ist zum Empfangen eines Präzisions-Zeit-Protokoll-, PTP-, Pakets, wobei das PTP-Paket durchgängige Parameterinformationen trägt, wobei die durchgängigen Parameterinformationen eine Domänennummer umfassen, wobei die Taktvorrichtung durch Folgendes gekennzeichnet ist:
ein Bestimmungsmodul (92), das ausgelegt ist zum Beurteilen, ob die Domänennummer dieselbe wie eine in der Taktvorrichtung selbst konfigurierte Domänennummer ist, und zum Bestimmen, dass das empfangene PTP-Paket kein PTP-Paket der Vorrichtung ist, wenn ein Beurteilungsergebnis ist, dass sich die Domänennummer von der in der Taktvorrichtung selbst konfigurierten Domänennummer unterscheidet, und
ein Weiterleitungsmodul (93), das ausgelegt ist zum Weiterleiten des PTP-Pakets, das kein PTP-Paket der Vorrichtung ist, wenn das empfangene PTP-Paket kein PTP-Paket der Vorrichtung ist.

7. Vorrichtung nach Anspruch 6, wobei die Taktvorrichtung eine gewöhnliche Taktvorrichtung oder OC-Vorrichtung oder eine Grenz-Takt-Vorrichtung oder BC-Vorrichtung ist und die durchgängigen Parameterinformationen ferner eine Zieladresse umfassen; und
das Bestimmungsmodul dafür ausgelegt ist, ferner zu beurteilen, ob die Zieladresse eine Mehrsendeadresse der Taktvorrichtung selbst ist, wenn das Beurteilungsergebnis ist, dass die Domänennummer dieselbe wie die in der Taktvorrichtung selbst konfigurierte Domänennummer ist und sich die Taktvorrichtung in einem Mehrsende-Modus befindet, und zu bestimmen, dass das empfangene PTP-Paket kein PTP-Paket der Vorrichtung ist, wenn ein Beurteilungsergebnis ist, dass die Zieladresse nicht die Mehrsendeadresse der Taktvorrichtung selbst ist,
oder
das Bestimmungsmodul dafür ausgelegt ist, ferner zu beurteilen, ob die Zieladresse eine Anschlussadresse der Taktvorrichtung selbst ist, wenn das Beurteilungsergebnis ist, dass die Domänennummer dieselbe wie die in der Taktvorrichtung selbst konfigurierte Domänennummer ist und sich die Taktvorrichtung in einem Einzelsende-Modus befindet, und zu bestimmen, dass das empfangene PTP-Paket kein PTP-Paket der Vorrichtung ist, wenn ein Beurteilungsergebnis ist, dass die Zieladresse nicht die Anschlussadresse der Taktvorrichtung selbst ist.

8. Vorrichtung nach Anspruch 7, wobei:
das Weiterleitungsmodul eine erste Weiterleitungseinheit umfasst, wobei die erste Weiterleitungseinheit ausgelegt ist zum Ignorieren von PTP-Schichtverarbeiten an dem PTP-Paket, das kein PTP-Paket der Vorrichtung ist, und zum direkten Weiterleiten des PTP-Pakets, das kein PTP-Paket der Vorrichtung ist, an eine andere Knotenvorrichtung als die Taktvorrichtung.

9. Vorrichtung nach Anspruch 6, wobei die Taktvorrichtung eine transparente Taktvorrichtung oder TC-Vorrichtung ist; und
das Bestimmungsmodul ausgelegt ist zum Bestimmen, dass das empfangene PTP-Paket ein PTP-Paket der Vorrichtung ist, wenn das Beurteilungsergebnis ist, dass die Domänennummer dieselbe wie die in der TC-Vorrichtung selbst konfigurierte Domänennummer ist.

10. Vorrichtung nach Anspruch 9, wobei:
das Weiterleitungsmodul eine zweite Weiterleitungseinheit oder eine dritte Weiterleitungseinheit umfasst; wobei
die zweite Weiterleitungseinheit ausgelegt ist zum Ignorieren des PTP-Schichtverarbeitens an dem PTP-Paket, das kein PTP-Paket der Vorrichtung ist, und zum direkten Weiterleiten des PTP-Pakets, das kein PTP-Paket der Vorrichtung ist, an eine andere Knotenvorrichtung als die TC-Vorrichtung; und
die dritte Weiterleitungseinheit ausgelegt ist zum Durchführen normalen PTP-Schichtverarbeitens an dem PTP-Paket, das kein PTP-Paket der Vorrichtung ist, und zum Weiterleiten des verarbeiteten PTP-Pakets, das kein PTP-Paket der Vorrichtung ist, an eine andere Knotenvorrichtung als die TC-Vorrichtung.

## Revendications

1. Procédé de traitement d'un paquet PTP (Precision Time Protocol), comprenant :
la réception, par un dispositif d'horloge, d'un paquet PTP, le paquet PTP comportant des informations de paramètres de bout en bout, les informations de paramètres de bout en bout comprenant un numéro de domaine ; le procédé étant **caractérisé par** :
le jugement, par le dispositif d'horloge, que le numéro de domaine est identique ou non à un numéro de domaine configuré dans le dispositif d'horloge lui-même ;
s'il est jugé que le numéro de domaine est différent du numéro de domaine configuré dans le dispositif d'horloge lui-même, la détermination que le paquet PTP reçu n'est pas un paquet PTP du dispositif ; et
l'acheminement, par le dispositif d'horloge, du paquet PTP qui n'est pas un paquet PTP du dispositif quand le paquet PTP reçu n'est pas un paquet PTP du dispositif.

2. Procédé selon la revendication 1, dans lequel le dispositif d'horloge est un dispositif d'horloge ordinaire OC ou un dispositif d'horloge de frontière BC, et les informations de paramètres de bout en bout comprennent en outre une adresse destinataire ; et comprenant
s'il est jugé que le numéro de domaine est identique au numéro de domaine configuré dans le dispositif d'horloge lui-même et que le dispositif d'horloge est en mode de multidiffusion, le jugement supplémentaire que l'adresse destinataire est ou non une adresse de multidiffusion du dispositif d'horloge lui-même ; et
s'il est jugé que l'adresse destinataire n'est pas l'adresse de multidiffusion du dispositif d'horloge lui-même, la détermination que le paquet PTP reçu n'est pas un paquet PTP du dispositif ;
ou,
s'il est jugé que le numéro de domaine est identique au numéro de domaine configuré dans le dispositif d'horloge lui-même et que le dispositif d'horloge est en mode d'unidiffusion, le jugement supplémentaire que l'adresse destinataire est ou non une adresse de port du dispositif d'horloge lui-même ; et
s'il est jugé que l'adresse destinataire n'est pas une adresse de port du dispositif d'horloge lui-même, la détermination que le paquet PTP reçu n'est pas un paquet PTP du dispositif.

3. Procédé selon la revendication 2, dans lequel l'acheminement du paquet PTP qui n'est pas un paquet PTP du dispositif comprend :
l'abstraction, par le dispositif d'horloge, d'un traitement de couche PTP sur le paquet PTP qui n'est pas un paquet PTP du dispositif, et l'acheminement direct du paquet PTP qui n'est pas un paquet PTP du dispositif à un dispositif nodal autre que le dispositif d'horloge.

4. Procédé selon la revendication 1, dans lequel le dispositif d'horloge est un dispositif d'horloge transparente TC ; et comprenant
s'il est jugé que le numéro de domaine est identique au numéro de domaine configuré dans le dispositif TC, la détermination que le paquet PTP reçu est un paquet PTP du dispositif.

5. Procédé selon la revendication 4, dans lequel l'acheminement du paquet PTP qui n'est pas un paquet PTP du dispositif comprend :
l'abstraction, par le dispositif TC, d'un traitement de couche PTP sur le paquet PTP qui n'est pas un paquet PTP du dispositif, et l'acheminement direct du paquet PTP qui n'est pas un paquet PTP du dispositif à un dispositif nodal autre que le dispositif d'horloge ;
ou,
l'exécution, par le dispositif TC, d'un traitement de couche PTP normal sur le paquet PTP qui n'est pas un paquet PTP du dispositif, et l'acheminement du paquet PTP traité qui n'est pas un paquet PTP du dispositif à un dispositif nodal autre que le dispositif d'horloge.

6. Dispositif d'horloge, comprenant :
un module de réception (91), confguré pour recevoir un paquet PTP (Precision Time Protocol), le paquet PTP comportant des informations de paramètres de bout en bout, les informations de paramètres de bout en bout comprenant un numéro de domaine ;
le dispositif d'horloge étant **caractérisé par** :
un module de détermination (92) configuré pour juger que le numéro de domaine est identique ou non à un numéro de domaine configuré dans le dispositif d'horloge lui-même et déterminer que le paquet PTP reçu n'est pas un paquet PTP du dispositif quand il est jugé que le numéro de domaine est différent du numéro de domaine configuré dans le dispositif d'horloge lui-même ; et
un module d'acheminement (93), configuré pour acheminer le paquet PTP qui n'est pas un paquet PTP du dispositif quand le paquet PTP reçu n'est pas un paquet PTP du dispositif.

7. Dispositif selon la revendication 6, le dispositif d'horloge étant un dispositif d'horloge ordinaire OC ou un dispositif d'horloge de frontière BC, et les informations de paramètres de bout en bout comprenant en outre une adresse destinataire ; et
le module de détermination est configuré pour juger en outre que l'adresse destinataire est ou non une adresse de multidiffusion du dispositif d'horloge lui-même quand il est jugé que le numéro de domaine est identique au numéro de domaine configuré dans le dispositif d'horloge lui-même et que le dispositif d'horloge est en mode de multidiffusion, et déterminer que le paquet PTP reçu n'est pas un paquet PTP du dispositif quand il est jugé que l'adresse destinataire n'est pas l'adresse de multidiffusion du dispositif d'horloge lui-même ;
ou,
le module de détermination est configuré pour juger en outre que l'adresse destinataire est ou non une adresse de port du dispositif d'horloge lui-même quand il est jugé que le numéro de domaine est identique au numéro de domaine configuré dans le dispositif d'horloge lui-même et que le dispositif d'horloge est en mode d'unidiffusion, et déterminer que le paquet PTP reçu n'est pas un paquet PTP du dispositif quand il est jugé que l'adresse destinataire n'est pas l'adresse de port du dispositif d'horloge lui-même.

8. Dispositif selon la revendication 7, dans lequel :
le module d'acheminement comprend une première unité d'acheminement, la première unité d'acheminement étant configurée pour faire abstraction d'un traitement de couche PTP sur le paquet PTP qui n'est pas un paquet PTP du dispositif, et acheminer directement le paquet PTP qui n'est pas un paquet PTP du dispositif à un dispositif nodal autre que le dispositif d'horloge.

9. Dispositif selon la revendication 6, dans lequel le dispositif d'horloge est un dispositif d'horloge transparente TC ; et
le module de détermination est configuré pour déterminer que le paquet PTP reçu est un paquet PTP du dispositif quand il est jugé que le numéro de domaine est identique au numéro de domaine configuré dans le dispositif TC lui-même.

10. Dispositif selon la revendication 9, dans lequel :
le module d'acheminement comprend une deuxième unité d'acheminement ou une troisième unité d'acheminement, dans lequel
la deuxième unité d'acheminement est configurée pour faire abstraction d'un traitement de couche PTP sur le paquet PTP qui n'est pas un paquet PTP du dispositif, et acheminer directement le paquet PTP qui n'est pas un paquet PTP du dispositif à un dispositif nodal autre que le dispositif TC ; et
la troisième unité d'acheminement est configurée pour effectuer un traitement de couche PTP normal sur le paquet PTP qui n'est pas un paquet PTP du dispositif, et acheminer le paquet PTP traité qui n'est pas un paquet PTP du dispositif à un dispositif nodal autre que le dispositif TC.
